# EUROPEAN PATENT SPECIFICATION

(11) **EP 3 110 188 B1**
(45) Date of publication and mention of the grant of the patent: **08.01.2025**
(21) Application number: 16167748.9
(22) Date of filing: 29.04.2016
(51) Int. Cl.: H04W 12/04, H04W 4/00, H04W 4/18

(54) **METHOD AND DEVICE FOR ACCESSING OPERATOR NETWORK**
VERFAHREN UND VORRICHTUNG ZUM ZUGRIFF AUF BETREIBERNETZ
PROCÉDÉ ET DISPOSITIF POUR ACCÉDER À UN RÉSEAU D'OPÉRATEUR

(30) Priority: 26.06.2015 CN 201510364100
(43) Date of publication of application: 28.12.2016
(73) Proprietor: Xiaomi Inc., Beijing 100085 (CN)
(72) Inventor: YANG, Zhongyu, Haidian District Beijing 100085 (CN); JIN, Feng, Haidian District Beijing 100085 (CN)
(74) Representative: Dehns Germany Partnerschaft mbB

(56) References cited:
- US-A1- 2010 311 468
- US-A1- 2011 306 318
- US-A1- 2012 108 204
- US-A1- 2012 108 295
- US-A1- 2013 210 388
- US-A1- 2014 335 829

## Description

### TECHNICAL FIELD

The present disclosure generally relates to communication field, and more particularly, to a method and a device for accessing an operator network.

### BACKGROUND

With the development of mobile Internet, most smart devices have the demands for accessing the Internet. In some particular application scenarios, for example, mobile smart devices, the demands for the smart devices to access the Internet are often temporary. Thus, how to make accessing to the Internet more flexible in such application scenarios where the demands for accessing the Internet are temporary becomes very important.

US 2012/108295 A1 discloses a method for accessing an operator network, where a request is made from an access control module that is pre-installed on the device prior to distribution to a user, wherein the access control module determines the available MNOs, and optionally determines their suitability for operation, and requests allocation of an eSIM, wherein an SPS may have the capabilities to generate SIMs for use with an MNO, or in other cases, an SPS may have a pool of eSIMs which it can allocate and deallocate, wherein the device may then be activated by programming the access data onto the device, wherein the access data may comprise an cSIM.

US 2014/335829 discloses a method for remotely downloading provisioning information on a mobile device where the user selects a region and a service provider, a server receives the request and provisions the corresponding virtual SIM on the mobile phone.

US 2010/311468 discloses a method and system for service provision to mobile communication subscribers with the use of so-called virtual SIM cards and also to respective machine-readable media.

### SUMMARY

In order to overcome the problems in related arts, the present disclosure provides a method and a device for accessing an operator network.

According to a first aspect of embodiments of the present disclosure, there is provided a method for enabling a smart device to access an operator network according to claim 1.

Optionally, before uploading detected information regarding an operator network to a server end, the method further includes:
determining whether a preset function option is switched on;
when the preset function option is switched on, uploading the detected information regarding the operator network to the server end.

Optionally, the uploading detected information regarding an operator network to a server end, includes:
establishing a remote connection with the server end via a built-in virtual SIM card; and
based on the established remote connection, uploading the detected information regarding the operator network to the server end;
wherein the built-in virtual SIM card is pre-configured as only having an ability of accessing the server end.

Optionally, the uploading detected information regarding an operator network to a server end, includes:
accessing an available WIFI network via a built-in WIFI chip,
establishing a remote connection with the server end via the WIFI network; and
based on the established remote connection, uploading the detected information regarding the operator network to the server end.

According to a second aspect of embodiments of the present disclosure, there is provided a device for accessing an operator network according to claim 5.

Optionally, the device further includes:
a determining module configured to determine whether a preset function option is switched on; wherein when the preset function option is switched on, the uploading modul uploads the information regarding the operator network detected by the detecting module to the server end.

Optionally, the uploading module includes:
a first establishing submodule configured to establish a remote connection with the server end via a built-in virtual SIM card; and
a first uploading submodule configured to, based on the established remote connection, upload the detected information regarding the operator network to the server end;
wherein the built-in virtual SIM card is pre-configured as only having an ability of accessing the server end.

Optionally, the uploading module includes:
an accessing submodule configured to access an available WIFI network via a built-in WIFI chip,
a second establishing submodule configured to establish a remote connection with the server end via the WIFI network; and
a second uploading submodule configured to, based on the established remote connection, upload the detected information regarding the operator network to the server end.

According to a third aspect of embodiments of the present disclosure, there is provided a device for accessing an operator network, including:
a processor; and
a memory for storing instructions executable by the processor;
wherein the processor is configured to perform any method as mentioned above or in the following.

According to a fourth aspect of embodiments of the present disclosure, there is provided a computer program, which when executed on a processor, performs any method as mentioned above or in the following, and a computer-readable storage medium having stored thereon such a computer program.

The technical solutions provided by embodiments of the present disclosure may have the following advantageous effects:
In the above embodiments of the present disclosure, detected information regarding an operator network is uploaded to a server end, a local virtual SIM card which is sent from the server end and is corresponding to the operator network is received, and then the operator network is accessed based on the local virtual SIM card. Thus, virtual SIM card resources can be dynamically requested from the server end without need of building a physical SIM card in a device.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for accessing an operator network according to an exemplary embodiment.
Fig. 2 is a flowchart showing another method for accessing an operator network according to an exemplary embodiment.
Fig. 3 is a block diagram showing a device for accessing an operator network according to an exemplary embodiment.
Fig. 4 is a block diagram showing another device for accessing an operator network according to an exemplary embodiment.
Fig. 5 is a block diagram showing another device for accessing an operator network according to an exemplary embodiment.
Fig. 6 is a block diagram showing another device for accessing an operator network according to an exemplary embodiment.
Fig. 7 is a block diagram showing another device for accessing an operator network according to an exemplary embodiment.
Fig. 8 is a block diagram showing a structure for the device for accessing an operator network according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminologies used herein are only for describing particular embodiments but not for limiting the present disclosure. The singular form words "a", "the", and "said" used in the present disclosure and append claims are intended to include plural form, unless otherwise clearly stated. Also, it shall be appreciated that the terminology "and/or" used herein refers to any or all combinations of one or more listed related items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if" used herein may be interpreted as "when" or "in response to determining that...".

At present, a smart device usually accesses the Internet via a physical Subscriber Identity Module (SIM) card or a Wireless Fidelity (WIFI) chip built in the smart device. On the one hand, for the solution of accessing the Internet via the built-in WIFI chip, because WIFI hotspots need to exist around the smart device during the accessing, there may be large limitations for outdoor mobile smart devices. On the other hand, for the solution of accessing the Internet via the built-in physical SIM card, because the built-in SIM number resources are rare, high production costs of the smart devices become problematic. Further, for a mobile smart device, since the demand for accessing the Internet is temporary, the built-in physical SIM card is a kind of resource waste.

In view of the above, the present disclosure proposes a method for accessing an operator network. A smart device uploads detected information regarding an operator network to a server end, and receives a local virtual SIM card which is sent from the server end and is corresponding to the operator network, and then accesses the operator network based on the local virtual SIM card. Thus, virtual SIM card resources can be dynamically requested from the server end without need of building a physical SIM card in the device.

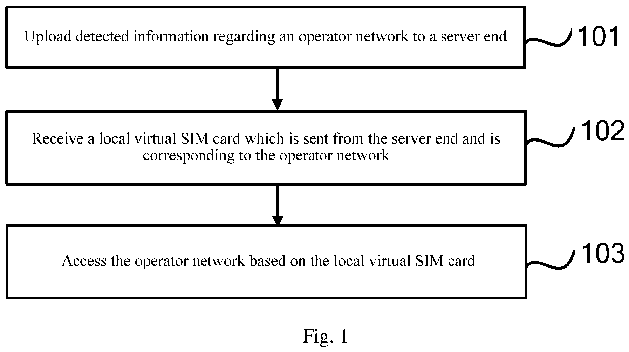

Fig. 1 shows a method for accessing an operator network according to an exemplary embodiment. The method for accessing an operator network is applied in a smart device and includes the following steps.

In step 101, detected information regarding an operator network is uploaded to a server end.

In step 102, a local virtual SIM card which is sent from the server end and is corresponding to the operator network is received.

In step 103, the operator network is accessed based on the local virtual SIM card.

In the above steps, the smart device may include mobile smart devices, such as mobile phones or other mobile smart devices; the server end may include distribution servers, server clusters or a cloud platform for providing virtual SIM card distribution services for smart devices. Different from the currently used physical SIM card which is removable from a mobile terminal, the virtual SIM card is a virtualization technology which simulates a virtual SIM card on a mobile terminal and uses the virtual SIM card to replace a physical SIM card to finish user identity verification and network authentication.

In the embodiment, there is no built-in physical SIM card in a smart device, and when the smart device is produced, information regarding the virtual SIM card may be built in a safe storage region in the smart device. A plurality of smart devices may share the same information regarding a virtual SIM card. The information regarding a virtual SIM card may be pre-configured as only having an ability of accessing a distribution server. When the information regarding a virtual SIM card is configured as only having an ability of accessing a distribution server, the smart device may perform normal detections and access an available operator network in surroundings via the built-in information regarding the virtual SIM card, but cannot obtain corresponding network data services from the available operator network in surroundings.

Further, a function option for starting a network access service may be pre-configured in the smart device. When the smart device needs to access the Internet, a user may enable the function for accessing an operator network by switching on the function option. The function option may be realized by a physical switching button preset on the smart device, or may be a virtual functional switching option in the system of the smart device.

After the above function option is switched on, the smart device may detect operator networks in surroundings by a built-in virtual SIM card and determine whether there is an available operator network among the detected operator networks in surroundings. If there is an available operator network among the detected operator networks in surroundings, the smart device may upload the information regarding the operator network to the distribution server, for example, information such as the country or region which the available operator network belongs to.

The uploading of the information regarding the operator network by the smart device may be realized by different implementations under different application scenarios.

On the one hand, for regions which are covered only by operator networks, for example, the wild, the built-in virtual SIM card in the device has the ability of accessing the distribution server, and thus when the smart device uploads the information regarding the operator network, the smart device may upload the information regarding the operator network to the distribution server based on the built-in virtual SIM card.

In implementations, when the built-in virtual SIM card detects the available operator network, the smart device may access the operator network and may try to establish a remote connection with the distribution server via the operator network. If the remote connection is successfully established, the smart device may upload the information regarding the available operator network to the distribution server. For detailed procedure of accessing the operator network via the virtual SIM card, existing implementations may be referred to and descriptions thereof are omitted in the embodiment.

Rather, if the built-in virtual SIM card detects a plurality of available operator networks, the smart device may output the plurality of available operator networks in a list form to the user to make the user select an operator network to be accessed.

On the other hand, for regions where there are free WIFI hotspots, when the smart device uploads the information regarding the operator network, the smart device may upload the information regarding the operator network to the distribution server via the WIFI hotspots.

In implantations, when the built-in virtual SIM card detects an available operator network, the smart device may detect whether there is an available WIFI hotspot in surroundings; if there is an available WIFI hotspot in surroundings, the smart device may access the WIFI network via the built-in WIFI chip and establish a remote connection with the distribution server via the WIFI network, and then upload the information regarding the available operator network to the distribution server based on the established remote connection.

In the embodiment, after the distribution server receives the information regarding the operator network uploaded by the smart device, the server may send the information regarding a local virtual SIM card corresponding to the operator network to the smart device and locally save a correspondence between the smart device and the information regarding the local virtual SIM card.

For example, when a user is internationally roaming carrying a smart device, the distribution server may determine whether a cooperation with an operator is established according to the information uploaded by the smart device such as the country or the region which the operator network belongs to; if the cooperation is established, the distribution server has a right of distributing local virtual SIM cards corresponding to the operator, and may thereby directly send a local virtual SIM card corresponding to the operator to the smart device.

After receiving the local virtual SIM card sent from the distribution server, the smart device may save the information regarding the local virtual SIM card in the safe storage region in the smart device. The smart device may initiate identity verification and network authentication to the local operator network via wireless channels according to the virtual SIM card. After the authentication is passed, the smart device may access the operator network using a local user identity to enjoy the network data services provided by the operator network.

**In** the embodiment, the information regarding the local virtual SIM card sent from the distribution server to the smart device may be recycled by the distribution server.

On the one hand, when the smart device does not need to access the operator network, the user may close the operator network access service by switching off the above function option. After the user switching off the above function option, the smart device is triggered to delete information regarding the local virtual SIM card stored in the safe storage region, and meanwhile to send to the server end a notification message for recycling the information regarding the local virtual SIM card.

On the other hand, when the built-in virtual SIM card detects that accessing the current operator network results in roaming, for example, the smart device carried by the user has moved out of the coverage of the operator network and entered into the coverage of another operator network, high charge will be incurred if the smart device still accesses the network via the received information regarding the local virtual SIM card. For such case, when the built-in virtual SIM card detects that accessing the current operator network will result in roaming, the smart device is triggered to delete the information regarding the local virtual SIM card stored in the safe storage region, and meanwhile to send to the server end a notification message for recycling the information regarding the local virtual SIM card. Rather, after roaming occurs, and the user still has the demand for accessing the operator network, the distribution server may re-send a local virtual SIM card for the smart device based on the above implementation procedure.

After the distribution server receives the notification message sent from the smart device for recycling the sent information regarding the local virtual SIM card, the distribution server may recycle the information regarding the local virtual SIM card, and delete the locally saved correspondence between the smart device and the information regarding the local virtual SIM card. Thus, the virtual SIM card may be reutilized by the distribution server, i.e., the virtual SIM card may be sent to other smart devices as virtual SIM card resources. In this way, recycling of virtual SIM card resources may be realized and thus the utilization of the virtual SIM card resources is improved.

**In** the above embodiments, the smart device uploads the detected information regarding an operator network to a server end, receives a local virtual SIM card which is sent from the server end and is corresponding to the operator network, and then accesses the operator network based on the local virtual SIM card. Thus, virtual SIM card resources can be dynamically requested from the server end without need of building a physical SIM card in the device. Consequently, enterprise costs are effectively reduced. Meanwhile, in the above embodiments, the recycling scheme of virtual SIM cards is introduced, and the distribution server may reutilize virtual SIM card resources which have already been sent, and thereby the utilization of the virtual SIM card resources is improved.

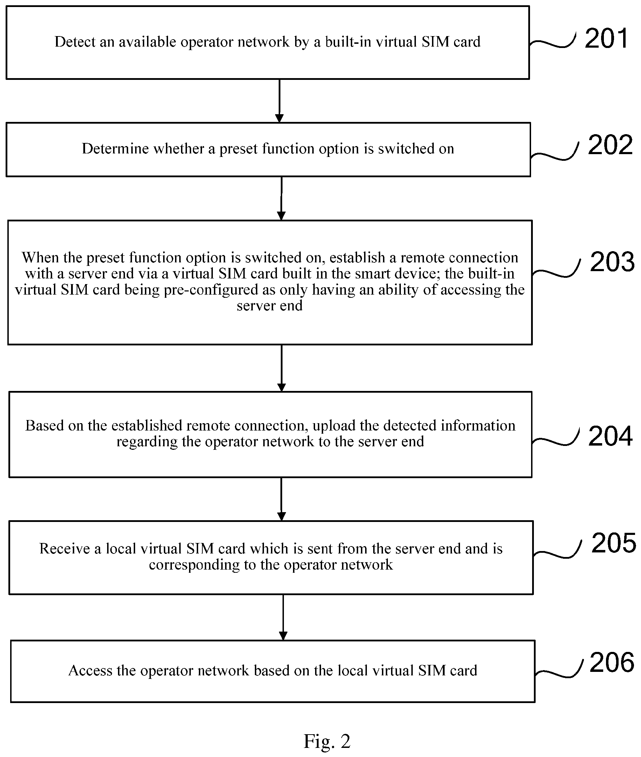

Fig. 2 shows a method for accessing an operator network according to an exemplary embodiment. The method for accessing an operator network is applied in a smart device and includes the following steps.

**In** step 201, an available operator network is detected by a built-in virtual SIM card.

**In** step 202, whether a preset function option is switched on is determined.

The sequence of steps 201 and 202 may be reversed.

**In** step 203, when the preset function option is switched on, a remote connection with a server end is established via a virtual SIM card built in the smart device. The built-in virtual SIM card is pre-configured as only having an ability of accessing the server end.

In step 204, based on the established remote connection, the detected information regarding the operator network is uploaded to the server end.

In step 205, a local virtual SIM card which is sent from the server end and is corresponding to the operator network is received.

In step 206, the operator network is accessed based on the local virtual SIM card.

In the above steps, the smart device may include mobile smart devices, such as mobile phones or other mobile smart devices; the server end may include distribution servers, server clusters or a cloud platform for providing virtual SIM card distribution services for smart devices. Different from the currently used physical SIM card which is removable from a mobile terminal, the virtual SIM card is a virtualization technology which simulates a virtual SIM card on a mobile terminal and uses the virtual SIM card to replace a physical SIM card to finish user identity verification and network authentication.

In the embodiment, there is no built-in physical SIM card in a smart device, and when the smart device is produced, information regarding the virtual SIM card may be built in a safe storage region in the smart device. A plurality of smart devices may share the same information regarding a virtual SIM card. The information regarding a virtual SIM card may be pre-configured as only having an ability of accessing a distribution server. When the information regarding a virtual SIM card is configured as only having an ability of accessing a distribution server, the smart device may perform normal detections and access an available operator network in surroundings via the built-in information regarding the virtual SIM card, but cannot obtain corresponding network data services from the available operator network in surroundings.

Further, a function option for starting a network access service may be pre-configured in the smart device. When the smart device needs to access the Internet, a user may enable the function for accessing an operator network by switching on the function option. The function option may be realized by a physical switching button preset on the smart device, or may be a virtual functional switching option in the system of the smart device.

After the above function option is switched on, the smart device may detect operator networks in surroundings by a built-in virtual SIM card and determine whether there is an available operator network among the detected operator networks in surroundings. If there is an available operator network among the detected operator networks in surroundings, the smart device may upload the information regarding the operator network to the distribution server, for example, information such as the country or region which the available operator network belongs to.

The uploading of the information regarding the operator network by the smart device may be realized by different implementations under different application scenarios.

On the one hand, for regions which are covered only by operator networks, for example, the wild, the built-in virtual SIM card in the device has the ability of accessing the distribution server, and thus when the smart device uploads the information regarding the operator network, the smart device may upload the information regarding the operator network to the distribution server based on the built-in virtual SIM card.

In implementations, when the built-in virtual SIM card detects the available operator network, the smart device may access the operator network and may try to establish a remote connection with the distribution server via the operator network. If the remote connection is successfully established, the smart device may upload the information regarding the available operator network to the distribution server. For detailed procedure of accessing the operator network via the virtual SIM card, existing implementations may be referred to and descriptions thereof are omitted in the embodiment.

Rather, if the built-in virtual SIM card detects a plurality of available operator networks, the smart device may output the plurality of available operator networks in a list form to the user to make the user select an operator network to be accessed.

On the other hand, for regions where there are free WIFI hotspots, when the smart device uploads the information regarding the operator network, the smart device may upload the information regarding the operator network to the distribution server via the WIFI hotspots.

In implantations, when the built-in virtual SIM card detects an available operator network, the smart device may detect whether there is an available WIFI hotspot in surroundings; if there is an available WIFI hotspot in surroundings, the smart device may access the WIFI network via the built-in WIFI chip and establish a remote connection with the distribution server via the WIFI network, and then upload the information regarding the available operator network to the distribution server based on the established remote connection.

In the embodiment, after the distribution server receives the information regarding the operator network uploaded by the smart device, the server may send the information regarding a local virtual SIM card corresponding to the operator network to the smart device and locally save a correspondence between the smart device and the information regarding the local virtual SIM card.

For example, when a user is internationally roaming carrying a smart device, the distribution server may determine whether a cooperation with an operator is established according to the information uploaded by the smart device such as the country or the region which the operator network belongs to; if the cooperation is established, the distribution server has a right of distributing local virtual SIM cards corresponding to the operator, and may thereby directly send a local virtual SIM card corresponding to the operator to the smart device.

After receiving the local virtual SIM card sent from the distribution server, the smart device may save the information regarding the local virtual SIM card in the safe storage region in the smart device. The smart device may initiate identity verification and network authentication to the local operator network via wireless channels according to the virtual SIM card. After the authentication is passed, the smart device may access the operator network using a local user identity to enjoy the network data services provided by the operator network.

In the embodiment, the information regarding the local virtual SIM card sent from the distribution server to the smart device may be recycled by the distribution server.

On the one hand, when the smart device does not need to access the operator network, the user may close the operator network access service by switching off the above function option. After the user switching off the above function option, the smart device is triggered to delete information regarding the local virtual SIM card stored in the safe storage region, and meanwhile to send to the server end a notification message for recycling the information regarding the local virtual SIM card.

On the other hand, when the built-in virtual SIM card detects that accessing the current operator network results in roaming, for example, the smart device carried by the user has moved out of the coverage of the operator network and entered into the coverage of another operator network, high charge will be incurred if the smart device still accesses the network via the received information regarding the local virtual SIM card. For such case, when the built-in virtual SIM card detects that accessing the current operator network will results in roaming, the smart device is triggered to delete the information regarding the local virtual SIM card stored in the safe storage region, and meanwhile to send to the server end a notification message for recycling the information regarding the local virtual SIM card. Rather, after roaming occurs, and the user still has the demand for accessing the operator network, the distribution server may re-send a local virtual SIM card for the smart device based on the above implementation procedure.

After the distribution server receives the notification message sent from the smart device for recycling the sent information regarding the local virtual SIM card, the distribution server may recycle the information regarding the local virtual SIM card, and delete the locally saved correspondence between the smart device and the information regarding the local virtual SIM card. Thus, the virtual SIM card may be reutilized by the distribution server, i.e., the virtual SIM card may be sent to other smart devices as virtual SIM card resources. In this way, recycling of virtual SIM card resources may be realized and thus the utilization of the virtual SIM card resources is improved.

In the above embodiments, the smart device uploads the detected information regarding an operator network to a server end, receives a local virtual SIM card which is sent from the server end and is corresponding to the operator network, and then accesses the operator network based on the local virtual SIM card. Thus, virtual SIM card resources can be dynamically requested from the server end without need of building a physical SIM card in the device. Consequently, enterprise costs are effectively reduced. Meanwhile, in the above embodiments, the recycling scheme of virtual SIM cards is introduced, and the distribution server may reutilize virtual SIM card resources which have already been sent, and thereby the utilization of the virtual SIM card resources is improved.

Corresponding to the above embodiments of the method for accessing an operator network, the present disclosure further provides embodiments of a device.

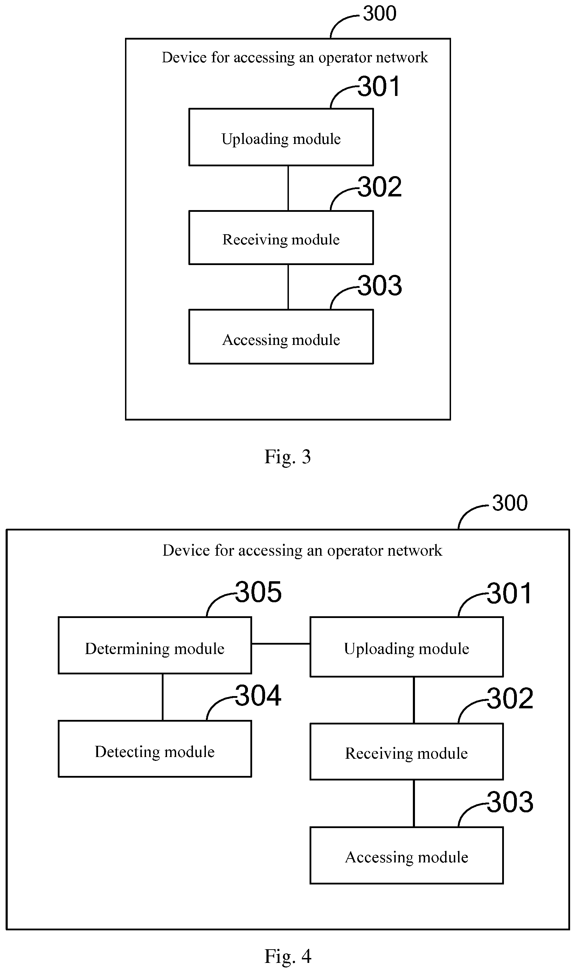

Fig. 3 is a block diagram showing a device for accessing an operator network according to an exemplary embodiment.

As shown in Fig. 3, the device 300 for accessing an operator network according to an exemplary embodiment includes an uploading module 301, a receiving module 302 and an accessing module 303.

The uploading module 301 is configured to upload detected information regarding an operator network to a server end.

The receiving module 302 is configured to receive a local virtual SIM card which is sent from the server end and is corresponding to the operator network.

The accessing module 303 is configured to access the operator network based on the local virtual SIM card.

In the above embodiment, the smart device uploads the detected information regarding an operator network to a server end, receives a local virtual SIM card which is sent from the server end and is corresponding to the operator network, and then accesses the operator network based on the local virtual SIM card. Thus, virtual SIM card resources can be dynamically requested from the server end without need of building a physical SIM card in the device.

Fig. 4 is a block diagram showing another device according to an exemplary embodiment of the present disclosure. On the basis of the embodiment as shown in Fig. 3, the device 300 in the embodiment in Fig. 4 may further include a detecting module 304 and a determining module 305.

The detecting module 304 is configured to detect an available operator network by a built-in virtual SIM card.

The determining module 305 is configured to determine whether a preset function option is switched on. When the preset function option is switched on, the uploading module 301 uploads the information regarding the operator network detected by the detecting module 304 to the server end.

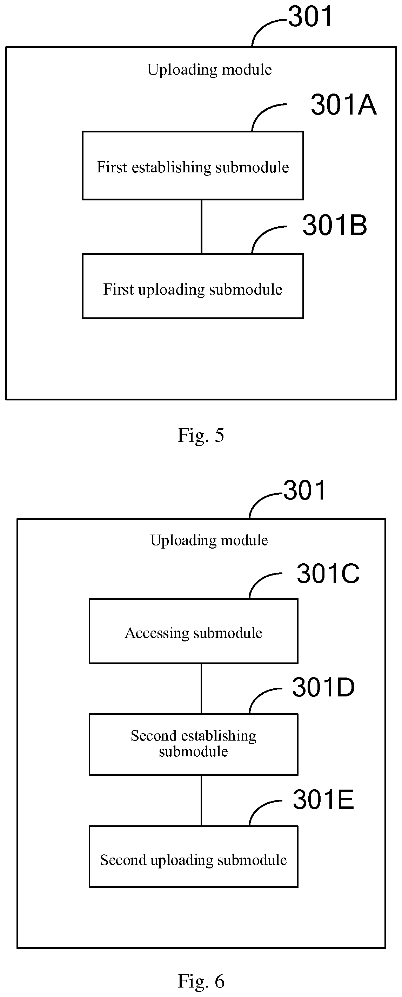

Fig. 5 is a block diagram showing another device according to an exemplary embodiment of the present disclosure. On the basis of the embodiment as shown in Fig. 3, the uploading module 301 in the embodiment in Fig. 5 may include a first establishing submodule 301A and a first uploading submodule 301B.

The first establishing submodule 301A is configured to establish a remote connection with the server end via a built-in virtual SIM card.

The first uploading submodule 301B is configured to, based on the established remote connection, upload the detected information regarding the operator network to the server end. The built-in virtual SIM card is pre-configured as only having an ability of accessing the server end.

It shall be noted that the structure of the first establishing submodule 301A and the first uploading submodule 301B in the embodiment of the device as shown in Fig. 5 may also be included in the embodiment of the device as shown in Fig. 4, and the present disclosure does not impose limitations on this.

Fig. 6 is a block diagram showing another device according to an exemplary embodiment of the present disclosure. On the basis of the embodiment as shown in Fig. 3, the uploading module 301 in the embodiment in Fig. 6 may include an accessing submodule 301C, a second establishing submodule 301D and a second uploading submodule 301E.

The accessing submodule 301C is configured to access an available WIFI network via a built-in WIFI chip.

The second establishing submodule 301D is configured to establish a remote connection with the server end via the WIFI network.

The second uploading submodule 301E is configured to, based on the established remote connection, upload the detected information regarding the operator network to the server end.

It shall be noted that the structure of the accessing submodule 301C, the second establishing submodule 301D and the second uploading submodule 301E in the embodiment of the device as shown in Fig. 6 may also be included in the embodiments of the device as shown in Figs. 4-5, and the present disclosure does not impose limitations on this.

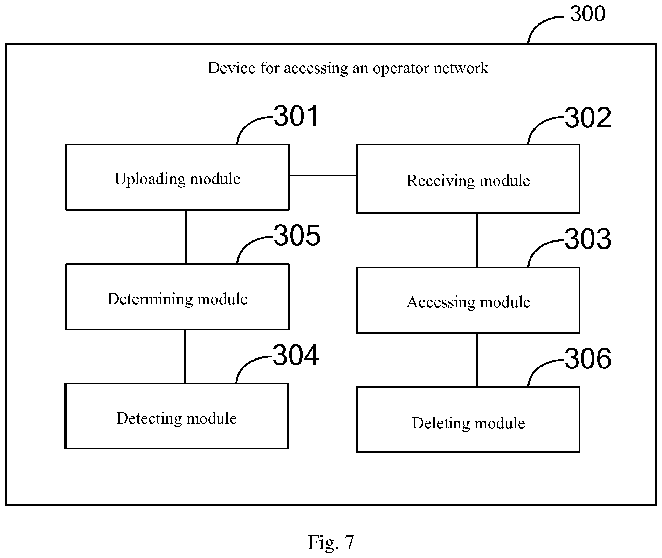

Fig. 7 is a block diagram showing another device according to an exemplary embodiment of the present disclosure. On the basis of the embodiment as shown in Fig. 3, the device 300 in the embodiment in Fig. 7 may further include a deleting module 306.

The deleting module 306 is configured to, when it is detected that the preset function option is switched off, or when it is detected that accessing the available operator network results in roaming, delete the received local virtual SIM card, and send to the server end a notification message for recycling the local virtual SIM card.

It shall be noted that the structure of the deleting module 306 in the embodiment of the device as shown in Fig. 7 may also be included in the embodiments of the device as shown in Figs. 4-6, and the present disclosure does not impose limitations on this.

For realizing of functions and roles of respective modules in the above devices, refer to the above description regarding corresponding steps in the methods, and detailed descriptions are omitted.

The embodiments of devices basically correspond to the embodiments of methods, and thus for related portions, the description about the embodiments of methods may be referred to. The above described embodiments of devices are only illustrative, and portions described as separated modules may be or may not be physically separated, and the portions shown as respective modules may be or may not be physical modules, i.e., the portions may be located at one place, or may be distributed over a plurality of network modules. A part or whole of the modules may be selected to realize the objects of the technical solutions of the present disclosure according to actual requirements. One of ordinary skill in this art may understand and practice the technical solutions of the present disclosure without creative work.

Correspondingly, the present disclosure further provides a device for accessing an operator network, including:
a processor; and
a memory for storing instructions executable by the processor;
wherein the processor is configured to perform:
   uploading detected information regarding an operator network to a server end;
   receiving a local virtual SIM card which is sent from the server end and is corresponding to the operator network; and
   accessing the operator network based on the local virtual SIM card.

Correspondingly, the present disclosure further provides a smart device. The smart device includes a memory and one or more programs. The one or more programs are stored in the memory, and are configured to be executed by one or more processors to perform instructions including the following steps:
uploading detected information regarding an operator network to a server end;
receiving a local virtual SIM card which is sent from the server end and is corresponding to the operator network; and
accessing the operator network based on the local virtual SIM card.

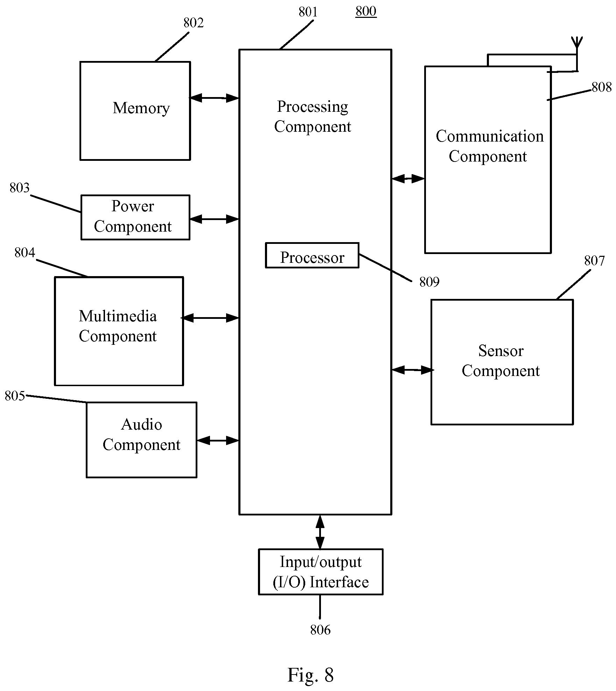

Fig. 8 is a block diagram showing a structure of a device for accessing an operator network according to an exemplary embodiment.

Fig. 8 is a block diagram of a device 800 for accessing an operator network according to an exemplary embodiment. For example, the device 800 may be a mobile phone, a smart device, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 801, a memory 802, a power component 803, a multimedia component 804, an audio component 805, an input/output (I/O) interface 806, a sensor component 807, and a communication component 808.

The processing component 801 typically controls overall operations of the device 800, such as the operations associated with display, telephone calls, data communications, camera operations, and recording operations. The processing component 801 may include one or more processors 809 to execute instructions to perform all or part of the steps in the above described methods. Moreover, the processing component 801 may include one or more modules which facilitate the interaction between the processing component 801 and other components. For instance, the processing component 801 may include a multimedia module to facilitate the interaction between the multimedia component 804 and the processing component 801.

The memory 802 is configured to store various types of data to support the operation of the device 800. Examples of such data include instructions for any applications or methods operated on the device 800, contact data, phonebook data, messages, , media files, video, etc. The memory 802 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 803 provides power to various components of the device 800. The power component 803 may include a power management system, one or more power sources, and any other components associated with the generation, management, and distribution of power in the device 800.

The multimedia component 804 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 804 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 805 is configured to output and/or input audio signals. For example, the audio component 805 includes a microphone ("MIC") configured to receive an external audio signal when the device 800 is in an operation mode, such as a call mode, a recording mode, and a voice recognition mode. The received audio signal may be further stored in the memory 802 or transmitted via the communication component 808. In some embodiments, the audio component 805 further includes a speaker to output audio signals.

The I/O interface 802 provides an interface between the processing component 801 and peripheral interface modules, such as a keyboard, a click wheel, buttons, and the like. The buttons may include, but are not limited to, a home button, a volume button, a starting button, and a locking button.

The sensor component 807 includes one or more sensors to provide status assessments of various aspects of the device 800. For instance, the sensor component 807 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 807 may include a proximity sensor configured to detect the presence of nearby objects without any physical contact. The sensor component 807 may also include a light sensor, such as a CMOS or CCD image sensor, for use in imaging applications. In some embodiments, the sensor component 807 may also include an accelerometer sensor, a gyroscope sensor, a magnetic sensor, a pressure sensor, or a temperature sensor.

The communication component 808 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 1008 receives a broadcast signal or broadcast associated information from an external broadcast management system via a broadcast channel. In one exemplary embodiment, the communication component 808 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 802, executable by the processor 809 in the device 800, for performing the above-described methods. For example, the non-transitory computer-readable storage medium may be a ROM, a RAM, a CD-ROM, a magnetic tape, a floppy disc, an optical data storage device, and the like.

When the instructions in the storage medium are executed by a processor of a mobile terminal, the mobile terminal is caused to perform a method for accessing an operator network, including:
uploading detected information regarding an operator network to a server end;
receiving a local virtual SIM card which is sent from the server end and is corresponding to the operator network; and
accessing the operator network based on the local virtual SIM card.

## Claims

1. A method for enabling a smart device to access an operator network, comprising:
detecting (201), by a built-in virtual SIM card, an available operator network which currently covers the smart device,
after the built-in virtual SIM card detects the available operator network, detecting whether there is an available WiFi network;
if there is the available WiFi network, accessing the available WIFI network via a built-in WIFI chip, and establishing a remote connection with a server end via the WIFI network; and
based on the established remote connection, uploading (101) detected information regarding the available operator network to the server end, the information enabling the server end to determine whether the server end has a right of distributing local virtual SIM cards corresponding to the operator network;
receiving (102) a local virtual SIM card which is sent from the server end and is corresponding to the operator network, in case the server end has determined that it has the right of distributing local virtual SIM cards corresponding to the operator network; and
accessing (103) the operator network based on the local virtual SIM card, the method further comprising:
determining (202) whether a preset function option is switched on;
when the preset function option is switched on, uploading (101) the detected information regarding the operator network to the server end;
when it is detected, by the built-in virtual SIM card, that roaming is resulted by moving the smart device out of the coverage from the available operator network into the coverage of another operator network, triggering by the built-in virtual SIM card deleting of the received local virtual SIM card in response to detection of that accessing the available operator network results in roaming, and sending to the server end a notification message for recycling the local virtual SIM card;
if it is determined that a need for continuing to access the another operator network exists, initiating uploading of detected information regarding the another operator network to request the server end to distribute a new local virtual SIM card.

2. A device for accessing an operator network, comprising:
a built-in virtual SIM card;
a detecting module (304) configured to detect an available operator network, which currently covers the smart device, by the built-in virtual SIM card,
the detecting module (304) being further configured to:
after the built-in virtual SIM card detects the available operator network, detect whether there is an available WiFi network;
if there is the available WiFi network, access the available WIFI network via a built-in WIFI chip, and establish a remote connection with a server end via the WIFI network; and
an uploading module (301) configured to upload detected information regarding an available operator network to the server end based on the established remote connection, the information enabling the server end to determine whether the server end has a right of distributing local virtual SIM cards corresponding to the operator network;
a receiving module (302) configured to receive a local virtual SIM card which is sent from the server end and is corresponding to the operator network, in case the server end has determined that it has the right of distributing local virtual SIM cards corresponding to the operator network; and
an accessing module (303) configured to access the operator network based on the local virtual SIM card, the device further comprising:
a determining module (305) configured to determine whether a preset function option is switched on;
wherein when the preset function option is switched on, the uploading module (301) uploads the information regarding the operator network detected by the detecting module to the server end;
wherein when it is detected by the built-in virtual SIM card that roaming is resulted by moving the smart device out of the coverage from the available operator network into the coverage of another operator network, the built-in virtual SIM card triggers deleting of the received local virtual SIM card by a deleting module (306) in response to detection of that accessing the available operator network results in roaming, and send to the server end a notification message for recycling the local virtual SIM card;
a module configured to, wherein if it is determined that a need for continuing to access the another operator network exists, initiate uploading of detected information regarding the another operator network to request the server end to distribute a new local virtual SIM card.

3. A computer program, which when executed on a processor, performs a method according to claim 1.

4. A recording medium readable by a computer and having recorded thereon a computer program according to claim 3.

## Patentansprüche

1. Verfahren, das einer intelligenten Vorrichtung, smart device, den Zugriff auf ein Betreibernetzwerk ermöglicht, umfassend:
Detektieren (201) eines verfügbaren Betreibernetzwerks, das die intelligente Vorrichtung gegenwärtig abdeckt, durch eine eingebaute virtuelle SIM-Karte,
nachdem die eingebaute virtuelle SIM-Karte das verfügbare Betreibernetzwerk detektiert hat, Detektieren, ob ein verfügbares WiFi-Netzwerk vorhanden ist;
bei Vorhandensein des verfügbaren WiFi-Netzwerks, Zugreifen auf das verfügbare WiFi-Netzwerk über einen eingebauten WiFi-Chip und Herstellen einer Fernverbindung mit einem Serverende über das WiFi-Netzwerk; und
basierend auf der hergestellten Fernverbindung, Hochladen (101) von detektierten Informationen bezüglich des verfügbaren Betreibernetzwerks auf das Serverende, wobei die Informationen dem Serverende ermöglichen, zu ermitteln, ob das Serverende ein Recht zum Verteilen lokaler virtueller SIM-Karten, die dem Betreibernetzwerk entsprechen, hat;
Empfangen (102) einer lokalen virtuellen SIM-Karte, die von dem Serverende gesendet wird und dem Betreibernetz entspricht, in dem Fall, dass das Serverende ermittelt hat, dass es das Recht hat, lokale virtuelle SIM-Karten, die dem Betreibernetz entsprechen, zu verteilen; und
Zugreifen (103) auf das Betreibernetz basierend auf der lokalen virtuellen SIM-Karte, wobei das Verfahren ferner umfasst:
Ermitteln (202), ob eine voreingestellte Funktionsoption eingeschaltet ist;
Hochladen (101) der ermittelten Informationen bezüglich des Betreibernetzes auf das Serverende, wenn die voreingestellte Funktionsoption eingeschaltet ist;
wenn durch die eingebaute virtuelle SIM-Karte detektiert wird, dass Roaming dadurch verursacht wird, dass das intelligente Gerät aus der Abdeckung des verfügbaren Betreibernetzes in die Abdeckung eines anderen Betreibernetzes bewegt wird, Auslösen durch die eingebaute virtuelle SIM-Karte eines Löschens der empfangenen lokalen virtuellen SIM-Karte als Reaktion auf die Detektion, dass ein Zugriff auf das verfügbare Betreibernetz zu Roaming führt, und Senden einer Benachrichtigungsnachricht an das Serverende zum Recycling der lokalen virtuellen SIM-Karte;
wenn ermittelt wird, dass ein Bedarf für einen fortgesetzten Zugriff auf das andere Betreibernetzwerk besteht, Initiieren eines Hochladens von ermittelten Informationen bezüglich des anderen Betreibernetzwerks, um das Serverende aufzufordern, eine neue lokale virtuelle SIM-Karte zu verteilen.

2. Vorrichtung zum Zugriff auf ein Betreibernetzwerk, umfassend:
eine eingebaute virtuelle SIM-Karte;
ein Detektiermodul (304), das dazu konfiguriert ist, ein verfügbares Betreibernetzwerk, das gegenwärtig die intelligente Vorrichtung abdeckt, durch die eingebaute virtuelle SIM-Karte zu detektieren,
wobei das Detektiermodul (304) ferner dazu konfiguriert ist,
nachdem die eingebaute virtuelle SIM-Karte das verfügbare Betreibernetzwerk detektiert hat, zu detektieren, ob ein verfügbares WiFi-Netzwerk vorhanden ist;
bei Vorhandensein des verfügbaren WiFi-Netzwerks über einen eingebauten WiFi-Chip auf das verfügbare WiFi-Netzwerk zuzugreifen und über das WiFi-Netzwerk eine Fernverbindung mit einem Serverende herzustellen; und
ein Upload-Modul (301), das dazu konfiguriert ist, erkannte Informationen bezüglich eines verfügbaren Betreibernetzwerks basierend auf der hergestellten Fernverbindung auf das Serverende hochzuladen, wobei die Informationen dem Serverende ermöglichen, zu ermitteln, ob das Serverende das Recht hat, lokale virtuelle SIM-Karten, die dem Betreibernetzwerk entsprechen, zu verteilen;
ein Empfangsmodul (302), das dazu konfiguriert ist, eine lokale virtuelle SIM-Karte zu empfangen, die vom Serverende gesendet wird und dem Betreibernetzwerk entspricht, in dem Fall, dass das Serverende ermittelt hat, dass es das Recht hat, lokale virtuelle SIM-Karten zu verteilen, die dem Betreibernetzwerk entsprechen; und
ein Zugriffsmodul (303), das dazu konfiguriert ist, basierend auf der lokalen virtuellen SIM-Karte auf das Betreibernetzwerk zuzugreifen, wobei die Vorrichtung ferner umfasst:
ein Ermittlungsmodul (305), das dazu konfiguriert ist, zu ermitteln, ob eine voreingestellte Funktionsoption eingeschaltet ist;
wobei, wenn die voreingestellte Funktionsoption eingeschaltet ist, das Upload-Modul (301) die Informationen bezüglich des Betreibernetzwerks, die durch das Detektiermodul detektiert wurden, auf das Serverende hochlädt;
wobei, wenn durch die eingebaute virtuelle SIM-Karte detektiert wird, dass Roaming durch Bewegen der intelligenten Vorrichtung aus der Abdeckung des verfügbaren Betreibernetzes in die Abdeckung eines anderen Betreibernetzes verursacht wird, die eingebaute virtuelle SIM-Karte als Reaktion auf die Detektion, dass der Zugriff auf das verfügbare Betreibernetz zu Roaming führt, ein Löschen der empfangenen lokalen virtuellen SIM-Karte durch ein Löschmodul (306) auslöst und an das Serverende eine Benachrichtigung zum Recycling der lokalen virtuellen SIM-Karte sendet;
ein Modul, das dazu konfiguriert ist, wenn ermittelt wird, dass ein Bedarf für einen fortgesetzten Zugriff auf das andere Betreibernetzwerk besteht, das Hochladen von detektierten Informationen bezüglich des anderen Betreibernetzwerks zu initiieren, um das Serverende aufzufordern, eine neue lokale virtuelle SIM-Karte zu verteilen.

3. Computerprogramm, das bei Ausführung auf einem Prozessor ein Verfahren nach Anspruch 1 ausführt.

4. Speichermedium, das durch einen Computer lesbar ist und auf dem ein Computerprogramm nach Anspruch 3 gespeichert ist.

## Revendications

1. Procédé pour permettre à un dispositif intelligent d'accéder à un réseau d'opérateur, comprenant :
détecter (201), par une carte SIM virtuelle intégrée, un réseau d'opérateur disponible qui couvre actuellement le dispositif intelligent,
après que la carte SIM virtuelle intégrée a détecté le réseau d'opérateur disponible, détecter s'il y a un réseau WiFi disponible ;
s'il y a un réseau WiFi disponible, accéder au réseau WiFi disponible via un chip WiFi intégré, et établir une connexion à distance avec un terminal de serveur via le réseau WiFi ; et
sur la base de la connexion à distance établie, télécharger (101) des informations détectées concernant le réseau d'opérateur disponible vers le terminal de serveur, les informations permettant au terminal de serveur de déterminer si le terminal de serveur a un droit de distribution de cartes SIM virtuelles locales correspondantes au réseau d'opérateur ;
recevoir (102) une carte SIM virtuelle locale envoyée par le terminal de serveur et correspondante au réseau d'opérateur, dans le cas où le terminal de serveur a déterminé qu'il a le droit de distribuer des cartes SIM virtuelles locales correspondantes au réseau d'opérateur ; et
accéder (103) au réseau d'opérateur sur base de la carte SIM virtuelle locale, le procédé comprenant en outre :
déterminer (202) si une option de fonction prédéfinie est activée ;
lorsque l'option de fonction prédéfinie est activée, télécharger (101) les informations détectées concernant le réseau d'opérateur vers le terminal de serveur ;
lorsqu'il est détecté, par la carte SIM virtuelle intégrée, qu'une itinérance résulte d'un déplacement du dispositif intelligent hors de la couverture du réseau d'opérateur disponible vers la couverture d'un autre réseau d'opérateur, déclencher, par la carte SIM virtuelle intégrée, une suppression de la carte SIM virtuelle locale reçue en réponse à la détection que l'accès au réseau d'opérateur disponible résulte une itinérance, et envoyer au terminal de serveur un message de notification pour le recyclage de la carte SIM virtuelle locale ;
s'il est déterminé qu'il est nécessaire de continuer à accéder à l'autre réseau d'opérateur, initier le téléchargement des informations détectées concernant l'autre réseau d'opérateur pour demander au terminal de serveur de distribuer une nouvelle carte SIM virtuelle locale.

2. Dispositif d'accès à un réseau d'opérateur, comprenant :
une carte SIM virtuelle intégrée
un module de détection (304) configuré pour détecter un réseau d'opérateur disponible, qui couvre actuellement le dispositif intelligent, par la carte SIM virtuelle intégrée,
le module de détection (304) étant en outre configuré pour :
après que la carte SIM virtuelle intégrée a détecté le réseau d'opérateur disponible, détecter s'il y a un réseau WiFi disponible ;
s'il y a le réseau WiFi disponible, accéder au réseau WiFi disponible via un chip WiFi intégré, et établir une connexion à distance avec un terminal de serveur via le réseau WiFi ; et
un module de téléchargement (301) configuré pour télécharger des informations détectées concernant un réseau d'opérateur disponible vers le terminal de serveur sur base de la connexion à distance établie, les informations permettant au terminal de serveur de déterminer si le terminal de serveur a un droit de distribution de cartes SIM virtuelles locales correspondantes au réseau d'opérateur ;
un module de réception (302) configuré pour recevoir une carte SIM virtuelle locale envoyée par le terminal de serveur et correspondante au réseau d'opérateur, dans le cas où le terminal de serveur a déterminé qu'il a le droit de distribution de cartes SIM virtuelles locales correspondantes au réseau d'opérateur ; et
un module d'accès (303) configuré pour accéder au réseau d'opérateur sur base de la carte SIM virtuelle locale, le dispositif comprenant en outre :
un module de détermination (305) configuré pour déterminer si une option de fonction prédéfinie est activée ;
dans lequel, lorsque l'option de fonction prédéfinie est activée, le module de téléchargement (301) télécharge les informations concernant le réseau d'opérateur détectées par le module de détection vers le terminal de serveur ;
dans lequel, lorsqu'il est détecté par la carte SIM virtuelle intégrée qu'une itinérance résulte d'un déplacement du dispositif intelligent hors de la couverture du réseau d'opérateur disponible vers la couverture d'un autre réseau d'opérateur, la carte SIM virtuelle intégrée déclenche une suppression de la carte SIM virtuelle locale reçue par un module de suppression (306) en réponse à la détection que l'accès au réseau d'opérateur disponible résulte une itinérance, et envoie au terminal de serveur un message de notification pour le recyclage de la carte SIM virtuelle locale ;
un module configuré pour, dans lequel, s'il est déterminé qu'il existe un besoin de continuer à accéder à l'autre réseau d'opérateur, initier le téléchargement des informations détectées concernant l'autre réseau d'opérateur pour demander au terminal de serveur de distribuer une nouvelle carte SIM virtuelle locale.

3. Programme d'ordinateur qui, lorsqu'il est exécuté sur un processeur, effectue un procédé selon la revendication 1.

4. Médium lisible par un ordinateur et ayant enregistré un programme d'ordinateur selon la revendication 3.
